(19) Europäisches Patentamt
European Patent Office
Office européen des brevets

(11) Veröffentlichungsnummer: **0 414 068 B1**

(12) # EUROPÄISCHE PATENTSCHRIFT

(45) Veröffentlichungstag der Patentschrift: **02.03.94**

(51) Int. Cl.$^5$: **C09B 62/008**

(21) Anmeldenummer: **90115374.2**

(22) Anmeldetag: **10.08.90**

(54) **Reaktivfarbstoffe.**

(30) Priorität: **23.08.89 DE 3927790**

(43) Veröffentlichungstag der Anmeldung:
**27.02.91 Patentblatt 91/09**

(45) Bekanntmachung des Hinweises auf die Patenterteilung:
**02.03.94 Patentblatt 94/09**

(84) Benannte Vertragsstaaten:
**CH DE FR GB LI**

(56) Entgegenhaltungen:
**DE-A- 3 426 008**
**DE-A- 3 732 381**
**US-A- 4 377 517**

(73) Patentinhaber: **BAYER AG**

**D-51368 Leverkusen(DE)**

(72) Erfinder: **Herd, Karl-Josef, Dr.**
**Am Gartenfeld 66**
**D-5068 Odenthal-Holz(DE)**
Erfinder: **Hoppe, Manfred, Dr.**
**Kölner Strasse 233**
**D-5067 Kürten 2(DE)**
Erfinder: **Henk, Hermann, Dr.**
**Roggendorfstrasse 55**
**D-5000 Köln 80(DE)**
Erfinder: **Brockmann, Rolf, Dr.**
**Romaney 5**
**D-5060 Bergisch Gladbach 2(DE)**
Erfinder: **Stöhr, Frank-Michael, Dr.**
**Am Thelen Siefen 10**
**D-5068 Odenthal(DE)**

EP 0 414 068 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind Monoazoreaktivfarbstoffe der Formel

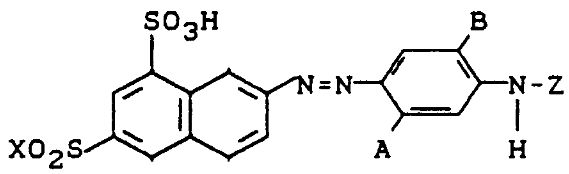

(1)

worin

A = H, Halogen, Alkyl, Alkoxy, Acylamino, Amino,
B = H, Alkyl, Alkoxy,
X = $-CH=CH_2$ oder $-CH_2CH_2-Y$ mit
Y = alkalisch eliminierbarer Rest,
Z = faserreaktiver Rest

Halogen steht vorzugsweise für Cl,
Alkyl steht vorzugsweise für gegebenenfalls substituiertes $C_1$-$C_6$-Alkyl,
Acylamino steht bevorzugt für -NHCOR, $-NHCONH_2$, -NHCONHR', $-NHSO_2R''$ oder -NHCOOR'' mit

R = H, $C_1$-$C_6$-Alkyl, Cycloalkyl, $C_2$-$C_6$-Alkenyl, Phenyl, Phenyl-$C_1$-$C_4$-alkyl, Naphthyl, Phenoxy oder $C_1$-$C_4$-Alkoxy,
R' = gegebenenfalls substituiertes $C_1$-$C_6$-Alkyl, Cycloalkyl, Phenyl-$C_1$-$C_4$-alkyl, Phenyl,
R'' = gegebenenfalls substituiertes $C_1$-$C_6$-Alkyl, Phenyl,

wobei die genannten Alkyl-, Cycloalkyl-, Alkenyl-, Phenyl-, Phenylalkyl-, Naphthyl-, Phenoxy- und Alkoxyreste übliche Substituenten aufweisen können.

Geeignete Substituenten für die Alkylreste sind beispielsweise OH, Cl, Br, CN, COOH, COO-$C_1$-$C_4$-Alkyl, O$C_1$-$C_4$-Alkyl, $SO_3H$, $SO_2X$.

Geeignete Substituenten für die Phenylreste sind beispielsweise $C_1$-$C_4$-Alkyl, Cl, Br, OH, COOH, $SO_3H$, NHCO$C_1$-$C_4$-Alkyl, COO$C_1$-$C_4$-Alkyl, $C_1$-$C_4$-Alkoxy, $SO_2X$.

Geeignete Substituenten für die Naphthylreste sind inbesondere Cl, Br, OH, COOH, $SO_3H$.

Geeignete Alkenylreste sind Allyl oder $CH=CH_2-CO_2H$.

Geeignete Cycloalkylreste sind Cyclohexyl.

Geeignete alkalisch eliminierbare Reste Y sind beispielsweise $OSO_3H$, $OCOCH_3$, $SSO_3H$ oder Cl.

Geeignete faserreaktive Reste, d.h. solche die mit den OH-oder NH-Gruppen der Faser unter Färbebedingungen unter Ausbildung kovalenter Bindungen reagieren, sind insbesondere solche, die mindestens einen reaktiven Substituenten an einen 5- oder 6-gliedrigen aromatischheterocyclischen Ring gebunden enthalten, bspw. an einen Monoazin-, Diazin- oder Triazinring, insbesondere einen Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatisch-carbocyclische Ringe aufweist, bspw. ein Chinolin-, Phthalazin-, Cinnolin-, Chinazolin-, Chinoxalin-, Acridin-, Phenazin- und Phenanthridin-Ring-System.

Unter den reaktiven Substituenten am Heterocyclus sind beispielsweise zu erwähnen Halogen (Cl, Br oder F), Ammonium einschließlich Hydrazinium, Pyridinium, Picolinium, Carboxypyridinium, Sulfonium, Sulfonyl, Azido($N_3$), Rhodanido, Thiolether, Oxiether, Sulfinsäure und Sulfonsäure.

Im einzelnen sind beispielsweise zu nennen:
2,4-Difluortriazinyl-6-, 2,4-Dichlortriazinyl-6-, Monohalogen-sym.-triazinylreste, insbesondere Monochlor- und Monofluortriazinylreste, die durch Alkyl, Aryl, Amino, Monoalkylamino, Dialkylamino, Aralkylamino, Arylamino, Morpholino, Piperidino, Pyrrolidino, Piperazino, Alkoxy, Aryloxy, Alkylthio, Arylthio substituiert sind, wobei Alkyl vorzugsweise gegebenenfalls substituiertes $C_1$-$C_4$-Alkyl, Aralkyl vorzugsweise gegebenenfalls substituiertes Phenyl-$C_1$-$C_4$-alkyl und Aryl vorzugsweise gegebenenfalls substituiertes Phenyl oder Naphthyl bedeutet und wobei bevorzugte Substituenten für Alkyl Halogen, Hydroxy, Cyan, Vinylsulfonyl, substituiertes Alkylsulfonyl, Dialkylamino, Morpholino, $C_1$-$C_4$-Alkoxy, Vinylsulfonyl-$C_2$-$C_4$-Alkoxy, substituierte Alkylsulfonyl-$C_2$-$C_4$-Alkoxy, Carboxy, Sulfo oder Sulfato sind und für Phenyl und Naphthyl, Sulfo, $C_1$-$C_4$-Alkyl, $C_1$-$C_4$-Alkoxy, Carboxy, Halogen, Acylamino, Vinylsulfonyl, substituiertes Alkylsulfonyl, Hydroxy, Amino.

Im einzelnen seien folgende Reste genannt:
2-Amino-4-fluor-triazinyl-6, 2-Methylamino-4-fluor-triazinyl-6, 2-Ethylamino-4-fluortriazinyl-6, 2-Isopropylamino-4-fluor-triazinyl-6, 2-Dimethylamino-4-fluortriazinyl-6, 2-Diethylamino-4-fluor-triazinyl-6, 2-β-Methoxy-ethylamino-4-fluor-triazinyl-6, 2-β-Hydroxyethylamino-4-fluor-triazinyl-6, 2-Di-(β-hydroxyethylamino)-4-fluor-triazinyl-6, 2-β-Sulfoethylamino-4-fluor-triazinyl-6, 2-β-Sulfoethyl-methylamino-4-fluor-triazinyl-6, 2-Carboxymethylamino-4-fluor-triazinyl-6, 2-Di-(carboxymethylamino)-4-fluar-triazinyl-6, 2-Sulfomethyl-methylamino-4-fluor-triazinyl-6, 2-β-Cyanethylamino-4-fluor-triazinyl-6, 2-Benzylamino-4-fluor-triazinyl-6, 2-β-Phenylethylamino-4-fluor-triazinyl-6, 2-Benzyl-methylamino-4-fluor-triazinyl-6, 2-(4′-Sulfobenzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2′,5′-Disulfophenyl)-amino-4-fluor-triazinyl-6, 2-(o-, m-, p-Chlorphenyl)-amino-4-fluor-triazinyl-6, 2-(o-, m-, p-Methoxyphenyl)-amino-4-fluor-triazinyl-6, 2-(2′-Methyl-4′-sulfophenyl)-amino-4-fluor-triazinyl-6, 2-(2′-Methyl-5′-sulfophenyl)-amino-4-fluor-triazinyl-6, 2-(2′-Chlor-4′-sulfophenyl)-amino-4-fluor-triazinyl-6, 2-(2′-Chlor-5′-sulfophenyl)-amino-4-fluor-triazinyl-6, 2-(2′-Methoxy-4′-sulfophenyl)-amino-4-fluor-triazinyl-6, 2-(o-, m-, p-Carboxyphenyl)-amino-4-fluor-triazinyl-6, 2-(2′,4′-Disulfophenyl)-amino-4-fluor-triazinyl-6, 2-(3′,5′-Disulfophenyl)-amino-4-fluor-triazinyl-6, 2-(2′-Carboxy-4′-sulfophenyl)-amino-4-fluor-triazinyl-6,2-(2′-Carboxy-5′-sulfophenyl)-amino-4-fluor-triazinyl-6,2-(6′-Sulfonaphthyl-(2′))-amino-4-fluor-triazinyl-6,2-(4′,8′-Disulfonaphthyl-(2′))-amino-4-fluor-triazinyl-6, 2-(6′,8′-Disulfonaphthyl-(2′))-amino-4-fluor-triazinyl-6, 2-(N-Methyl-N-phenyl)-amino-4-fluor-triazinyl-6, 2-(N-Ethyl-N-phenyl)-amino-4-fluor-triazinyl-6, 2-(N-β-Hydroxyethyl-N-phenyl)-amino-4-fluor-triazinyl-6, 2-(N-iso-Propyl-N-phenyl)-amino-4-fluor-triazinyl-6, 2-Morpholino-4-fluor-triazinyl-6, 2-Piperidino-4-fluor-triazinyl-6, 2-(4′,6′,8′ -Trisulfonaphthyl-(2′))-amino-4-fluor-triazinyl-6,2-(3′,6′,8′-Trisulfonaphthyl-(2′))-amino-4-fluor-triazinyl-6, 2-(3′,6′-Disulfonaphthyl-(1′))-amino-4-fluor-triazinyl-6, N-Methyl-N-(2,4-dichlortriazinyl-6)-carbamyl, N-Methyl-N-(2-methylamino-4-chlortriazinyl-6)-carbamyl, N-Methyl-N-(2-dimethylamino-4-chlortriazinyl-6)-carbamyl, N-Methyl-bzw. N-Ethyl-N-(2,4-dichlortriazinyl-6)-aminoacetyl-, 2-Methoxy-4-fluor-triazinyl-6, 2-Ethoxy-4-fluor-triazinyl-6, 2-Phenoxy-4-fluor-triazinyl-6, 2-(o-, m-oder p-Sulfophenoxy)-4-fluor-triazinyl-6, 2-(o-, m-oder p-Methyl- oder -Methoxy-phenoxy)-4-fluor-triazinyl-6, 2-β-Hydroxyethylmercapto-4-fluor-triazinyl-6, 2-Phenylmercapto-4-fluor-triazinyl-6, 2-(4′-Methylphenyl)mercapto-4-fluortriazinyl, 2-(2′,4′-Dinitrophenyl)mercapto-4-fluor-triazinyl-6, 2-Methyl-4-fluor-triazinyl-6, 2-Phenyl-4-fluor-triazinyl-6 sowie die entsprechenden 4-Chlor- bzw. 4-Brom-Triazinyl-Reste und die entsprechenden durch Halogenaustausch mit tertiären Basen wie Trimethylamin, Triethylamin, Dimethyl-β-hydroxyethylamin, Triethanolamin, N,N-Dimethylhydrazin, Pyridin, α-, β- oder γ-Picolin, Nicotinsäure oder Isonicotinsäure, Sulfinaten insbesondere Benzolsulfinsäure oder Hydrogensulfit erhältlichen Reste.

Die Halogentriazinylreste können auch mit einem zweiten Halogentriazinylrest oder einem Halogendiazinylrest oder einem oder mehreren Vinylsulfonyl- oder Sulfatoethylsulfonylresten verknüpft sein bspw. über ein Brückenglied

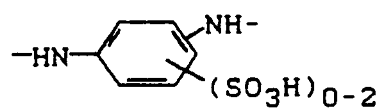 , 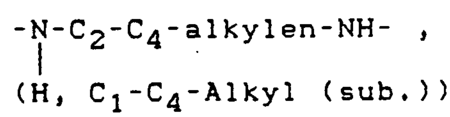 ,

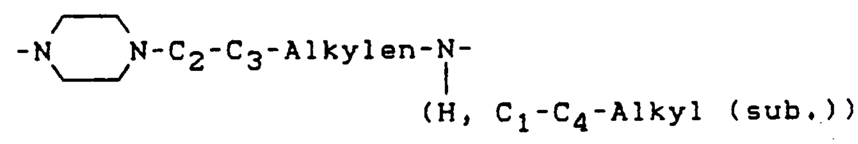

oder im Falle der Sulfatoethylsulfonyl- bzw. Vinylsulfonylgruppe über ein Brückenglied

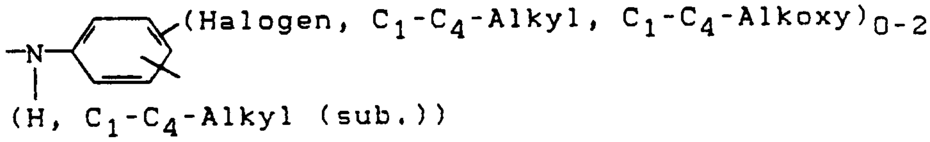
,

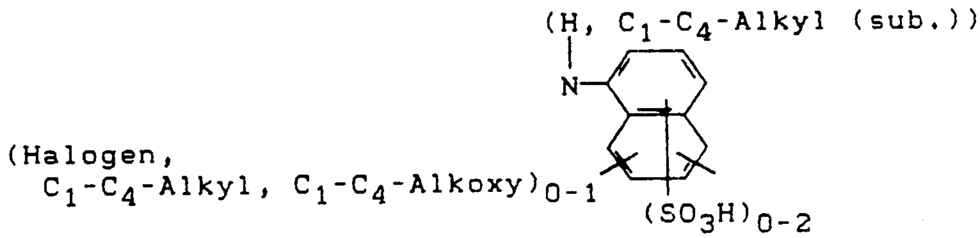

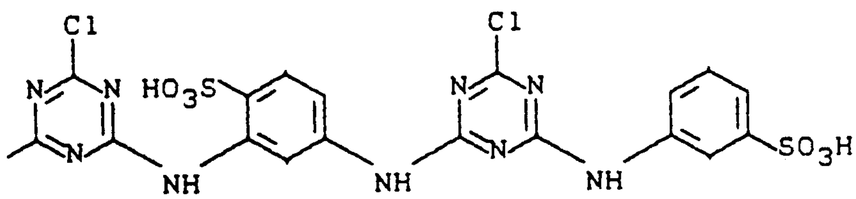

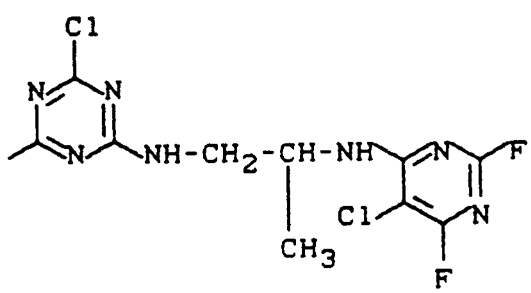

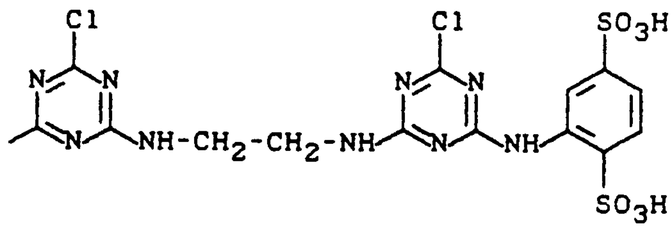

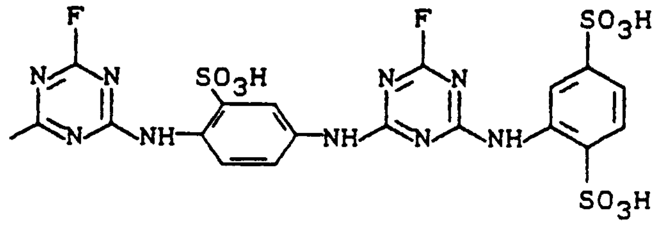

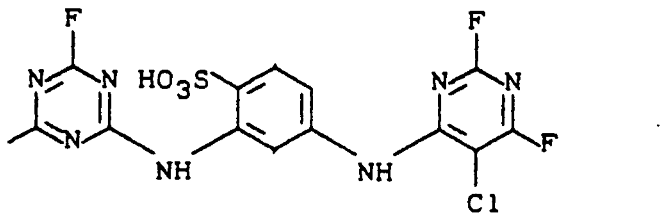

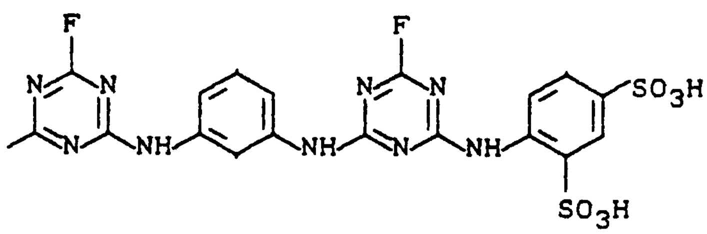

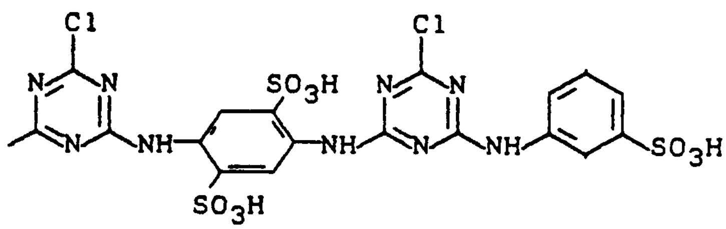

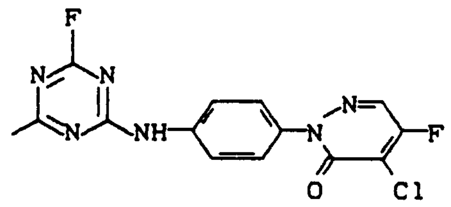

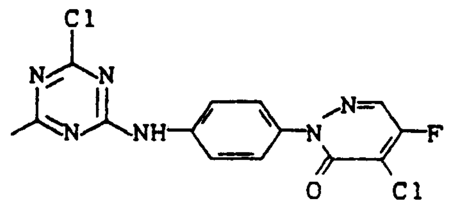

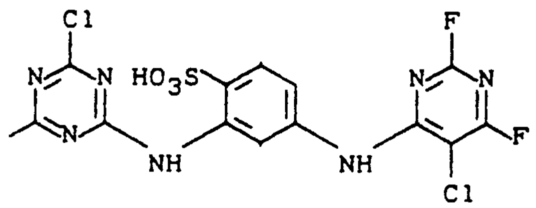

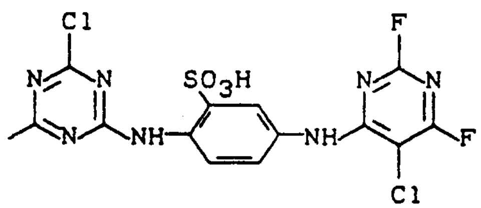

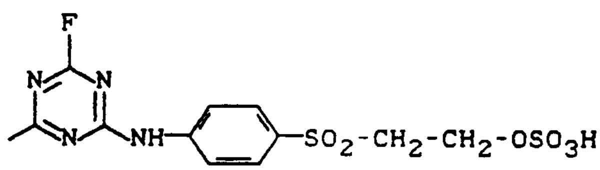

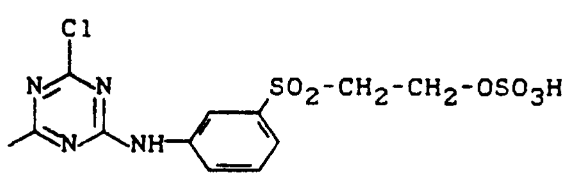

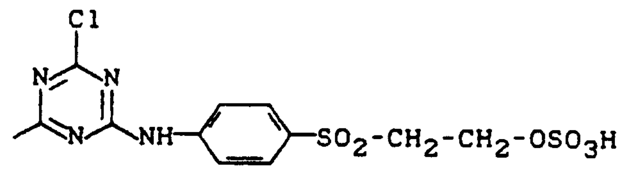

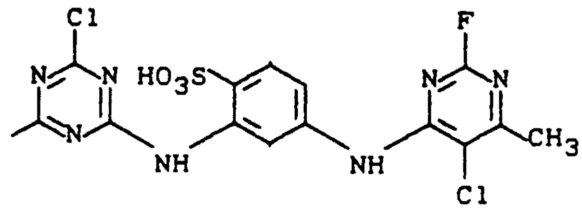

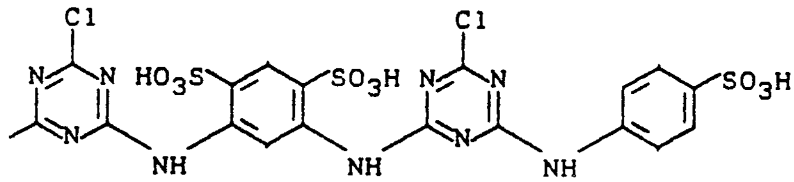

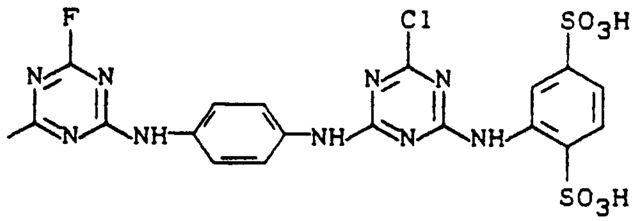

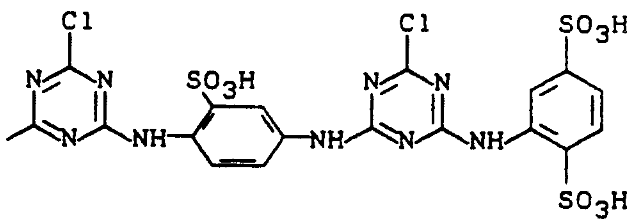

Mono-, Di- oder Trihalogenpyrimidinylreste, wie 2,4-Dichlorpyrimidinyl-6-, 2,4,5-Trichlorpyrimidinyl-6, 2,4-Dichlor-5-nitro- oder -5-methyl- oder -5-carboxymethyl- oder -5-carboxy- oder -5-cyano- oder -5-vinyl- oder -5-sulfo- oder -5-mono-, -di- oder -trichlormethyl- oder -5-carbalkoxy-pyrimidinyl-6-, 2,6-Dichlorpyrimidin-4-carbonyl-, 2,4-Dichlorpyrimidin-5-carbonyl-, 2-Chlor-4-methyl-pyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl, 2,4,6-Trichlorpyrimidin-5-carbonyl-, 2,4-Dichlorpyrimidin-5-sulfonyl-, 2-Chlor-chinoxalin-3-carbonyl, 2- oder 3-Monochlorchinoxalin-6-carbonyl-, 2- oder 3-Monochlorchinoxalin-6-sulfonyl-, 2,3-Dichlorchinoxalin-5- oder -6-carbonyl-, 2,3-Dichlorchinoxalin-5- oder -6-sulfonyl-, 1,4-Dichlorphthalazin-6-sulfonyl-oder -6-carbonyl-, 2,4-Dichlorchinazolin-7- oder -6-sulfonyl- oder -carbonyl-, 2- oder 3- oder 4-(4′,5′-Dichlorpyridazon-6′-yl-1′)-phenylsulfonyl- oder -carbonyl-, $\beta$-(4′,5′-Dichlorpyridazon-6′-yl-1′)-ethylcarbonyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl, 2,6-Difluor-5-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-,2-Fluor-5-methyl-4-pyrimidinyl-, 2,5,6-Trifluor-4-pyrimidinyl-, 5-Chlor-6-chlormethyl-2-fluor-4-pyrimidinyl-, 5-Chlor-6-dichlormethyl-2-fluor-4-pyrimidinyl-, 5-Chlor-6-trichlormethyl-2-fluor-4-pyrimidinyl-, 5-Chlor-2-chlormethyl-6-fluor-4-pyrimidinyl-, 5-Chlor-2-dichlormethyl-6-fluor-4-pyrimidinyl-, 5-Chlor-2-trichlormethyl-6-fluor-4-pyrimidinyl-, 5-Chlor-2-fluordichlormethyl-6-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl-oder -5-methylsulfonyl-4-pyrimidinyl-, 2-Fluor-5-carbonamido-4-pyrimidinyl-, 2-Fluor-5-carbmethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbmethoxy-4-pyrimidinyl-, 2-Fluor-6-phenyl-4-pyrimidinyl-, 2-Fluor-6-cyan-4-pyrimidinyl-, 5-Chlor-6-Fluor-2-Methyl-4-pyrimidinyl-, 5,6-Difluor-2-Trifluormethyl-4-pyrimidinyl-, 5-Chlor-6-Fluor-2-Dichlorfluormethyl-4-pyrimidinyl-, 2-Fluor-5-chlorpyrimidin-4-yl-, 2-Methyl-4-fluor-5-methylsulfonylpyrimidinyl-6-, 2,6-Difluor-5-methyl-sulfonyl-4-pyrimidinyl-, 2,6-Dichlor-5-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl-; sulfonylgruppenhaltige Triazinreste, wie 2,4-Bis-(phenylsulfonyl)-triazinyl-6-, 2-(3′-Carboxyphenyl)-sulfonyl-4-chlortriazinyl-6-, 2-(3′-Sulfophenyl)-sulfonyl-4-chlortriazinyl-6-, 2,4-Bis-(3′-carboxyphenylsulfonyl)-triazinyl-6-; sulfonylgruppenhaltige Pyrimidinringe, wie 2- Carboxymethylsulfonyl-pyrimidinyl-4-, 2-Methylsulfonyl- 6-methyl-pyrimidinyl-4-, 2-Methylsulfonyl-6-ethylpyrimidinyl-4-, 2-Phenylsulfonyl-5-chlor-6-methyl-pyrimidinyl-4-, 2,6-Bis-methylsulfonyl-pyrimidinyl-4-, 2,6-Bis-methylsulfonyl-5-chlor-pyrimidinyl-4-, 2,4-Bis-methylsulfonyl-pyrimidin-5-sulfonyl-, 2-Methylsulfonylpyrimidinyl-4-, 2-Phenylsulfanyl-pyrimidinyl-4-, 2-Trichlormethylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-ethyl-pyrimidinyl-4-, 2-Methylsulfonyl-5-chlor-6-chlormethyl-pyrimidinyl-4-, 2-Methylsulfonyl-4-chlor-6-methylpyrimidin-5-sulfonyl-, 2-Methylsulfonyl-5-nitro-6-methylpyrimidinyl-4-, 2,5,6-Tris-methylsulfonyl-pyrimidinyl-4-, 2-Methylsulfonyl-5,6-dimethyl-pyrimidinyl-4-pyrimidinyl-, 2-Fluor-6-carbonamido-4-pyrimidinyl-, 2-Fluor-6-carbmethoxy-4-pyrimidinyl-, 2-Fluor-6-phenyl-4-pyrimidinyl-, 2-Fluor-6-cyan-4-pyrimidinyl-, 5-Chlor-6-Fluor-2-Methyl-4-pyrimidinyl-, 5,6-Difluor-2-Trifluormethyl-4-pyrimidinyl-, 5-Chlor-6-Fluor-2-Dichlorfluormethyl-4-pyrimidinyl-, 2-Fluor-5-chlorpyrimidin-4-yl-, 2-Methyl-4-fluor-5-methylsulfonylpyrimidinyl-6-, 2,6-Difluor-5-methyl-sulfonyl-4-pyrimidinyl-, 2,6-Dichlor-5-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl-; sulfonylgruppenhaltige Triazinreste, wie 2,4-Bis-(phenylsulfonyl)-triazinyl-6-, 2-(3′-Carboxyphenyl)-sulfonyl-4-chlortriazinyl-6-, 2-(3′-Sulfophenyl)-sulfonyl-4-chlortriazinyl-6-, 2,4-Bis-(3′-carboxyphenylsulfonyl)-triazinyl-6-; sulfonylgruppenhaltige Pyrimidinringe, wie 2-Carboxymethylsulfonyl-pyrimidinyl-4-, 2-Methylsulfonyl- 6-methyl-pyrimidinyl-4-, 2-Methylsulfonyl-6-ethyl-pyrimidinyl-4- ,2-Phenylsulfonyl-5-chlor-6-methyl-pyrimidinyl-4-, 2,6-Bis-methylsulfonyl-pyrimidinyl-4-, 2,6-Bis- methylsulfonyl-5-chlor-pyrimidinyl-4-, 2,4-Bis-methylsulfonyl-pyrimidin-5-sulfonyl-, 2-Methylsulfonyl-pyrimidinyl-4-, 2-Phenylsulfonyl-pyrimidinyl-4-, 2-Trichlormethylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5- chlor-6-ethyl-pyrimidinyl-4-, 2-Methylsulfonyl-5-chlor- 6-chlormethyl-pyrimidinyl-4-, 2-Methylsulfonyl-4-chlor- 6-methylpyrimidin-5-sulfonyl-, 2-Methylsulfonyl-5-nitro- 6-methylpyrimidinyl-4-, 2,5,6-Tris-methylsulfonyl-pyrimidinyl-4-, 2-Methylsulfonyl-5,6-dimethyl-pyrimidinyl- 4-, 2-Ethylsulfonyl-5-chlor-6-methyl-pyrimidinyl-4-,2- Methylsulfonyl-6-chlor-pyrimidinyl-4-, 2,6-Bis-methylsulfonyl-5-chlor-pyrimidinyl-4-, 2-Methylsulfonyl-6- carboxypyrimidinyl-4-, 2-Methylsulfonyl-5-sulfo-pyrimidinyl-4-, 2-Methylsulfonyl-6-carbomethoxy-pyrimidinyl-4-, 2-Methylsulfonyl-5-carboxy-pyrimidinyl-4-, 2-Methylsulfonyl-5-cyan-6-methoxy-pyrimidinyl-4-, 2-Methylsulfonyl-5-chlor-pyrimidinyl-4-, 2-β-Sulfoethylsulfonyl-6-methyl-pyrimidinyl-4-, 2-Methylsulfonyl-5-brom-pyrimidinyl-4-, 2-Phenylsulfonyl-5-chlor-pyrimidinyl-4-, 2-Carboxymethylsulfonyl-5-chlor-6-methyl-pyrimidinyl-4-, 2-Methylsulfonyl-6-chlorpyrimidin-4- und -5-carbonyl-, 2,6-Bis-(methylsulfonyl)-pyrimidin-4-oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methylpyrimidin-5-sulfonyl- oder -carbonyl-; 2-Chlorbenzthiazol-5- oder -6-carbonyl- oder -5- oder -6-sulfonyl-, 2-Arylsulfonyl- oder Alkylsulfonylbenzthiazol-5- oder -6-carbonyl- oder -5- oder -6-sulfonyl-, wie 2-Methylsulfonyl- oder 2-Ethylsulfonylbenzthiazol-5- oder -6- sulfonyl- oder -carbonyl-, 2-Phenylsulfonylbenzthiazol-5- oder -6-sulfonyl- oder -carbonyl- und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl-, 2-Chlorbenzimidazol-5- oder -6-carbonyl- oder -sulfonyl-, 2-Chlor-1-methylbenzimidazol-5- oder -6-carbonyl- oder -sulfonyl-, 2-Chlor-4-methylthiazol-(1,3)-5-carbonyl-oder -4-oder -5-sulfanyl-, N-Oxid des 4-Chlor- oder 4-Nitrochinolin-5-carbonyl.

Desweiteren sind Reaktivgruppen der aliphatischen Reihe zu nennen, wie Acryloyl-, Mono-, Di- oder Trichloracryloyl-, wie -CO-CH=CH-Cl, -CO-CCl=$CH_2$, -CO-CCl=CH-$CH_3$, ferner -CO-CCl=CH-COOH, -CO-CH=CCl-COOH, β-Chlorpropionyl-, 3-Phenylsulfonylpropionyl-, 3-Methylsulfonylpropionyl-, 2-Fluor-2-chlor-3,3-difluorcyclobutan-1-carbonyl-, 2,2,3,3-Tetrafluorcyclobutan-carbonyl-1- oder -sulfonyl-1-, β-(2,2,3,3-Tetrafluorcyclobutyl-1)-acryloyl-,α- oder β-Bromacryloyl-, α- oder β-Alkyl- oder -Arylsulfonylacryloyl-Gruppe, wie α- oder β-Methylsulfonylacryloyl, Chloracetyl, Vinylsulfonyl, $-SO_2CH_2CH_2Y$ worin Y = alkalisch abspaltbare Gruppe, insbesondere $-OSO_3H$, $-OCOCH_3$, Cl, Br, F, $-SSO_3H$, $-OPO_3H_2$, $-OCOC_6H_5$, Di-$C_1$-$C_4$-Alkylamino, quartäres Ammonium, insbesondere $-N^{\oplus}(C_1\text{-}C_4\text{-Alkyl})_3$Anion$^{\ominus}$, $-OSO_2CH_3$, -SCN, $-NH-SO_2CH_3$, $-OSO_2-C_6H_4-CH_3$, $-OSO_2-C_6H_5$, -OCH,

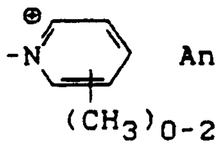 Anion$^{\ominus}$ oder 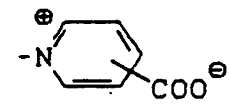

mit

Anion = bspw. $-OSO_3H$, $-SSO_3H$, $-OPO_3H_2$, -Cl, -Br, -F, -SCN, -OCN, $-OSO_2CH_3$, $-OSO_2C_6H_5$, $OCOCH_3$, -J, $-OSO_2OCH_3$, $-OSO_2C_6H_4CH_3$, $-OCOC_6H_5$,

bevorzugt sind Reaktivfarbstoffe der Formel (1), bei denen Z die Bedeutung eines Pyrimidinyl-, Methylpyrimidinyl- oder eines Triazinyl-Restes zukommt.

Besonders hervorzuheben sind Farbstoffe der Formel

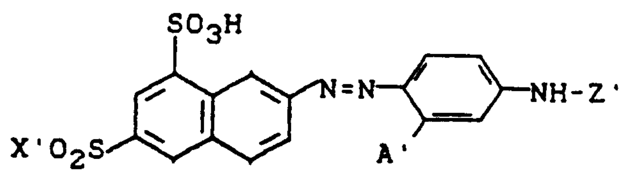 (2)

worin

X' = $CH=CH_2$ oder $CH_2CH_2OSO_3H$,

A' = $CH_3$, $OCH_3$, $NHCONH_2$, $NHCOCH_3$, $NHCOCH_2OH$, $NHCO-(CH_2)_2-CO_2H$,

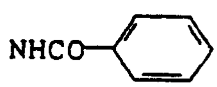

oder $NHSO_2CH_3$

und

Z' = 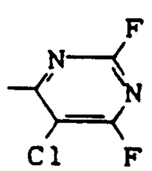 , 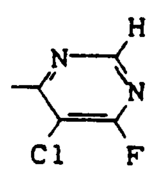 , 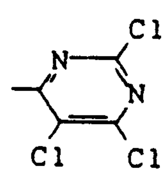 ,

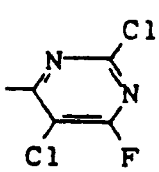 , 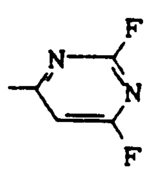 , 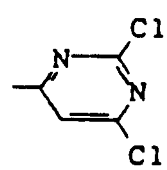 ,

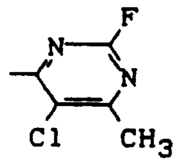 , 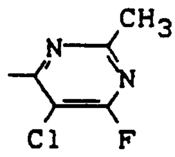 , 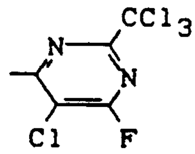 ,

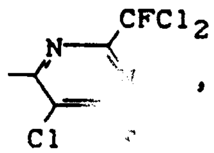 , 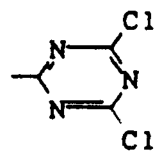 ,

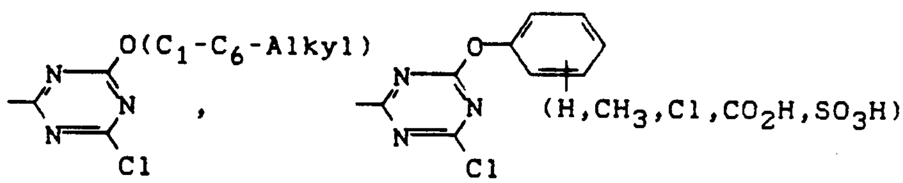

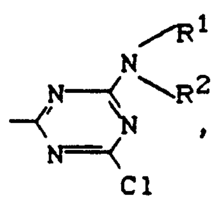 , 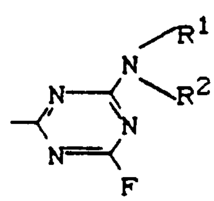 ,

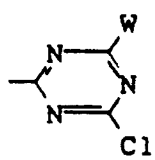 sowie 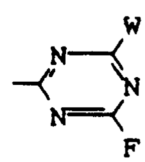 ,

mit

$R^1$ = H, gegebenenfalls substituiertes $C_1$-$C_6$-Alkyl, gegebenenfalls substituierter cycloaliphatischer Rest. (Substituenten z.B. Acylamino, Hydroxy, Halogen, Sulfo, Carboxy, Sulfato, β-Sulfatoethylsulfonyl, $C_1$-$C_4$-Alkoxy, Phenyl, mit Sulfo, Carboxy oder β-Sulfatoethylsulfonyl substituiertes Phenyl sowie Hetaryl)

$R^2$ = H, gegebenenfalls substituiertes $C_1$-$C_6$-Alkyl, gegebenenfalls substituiertes Phenyl, Naphthyl oder Hetaryl; (Substituenten für die Alkylreste beziehungsweise Acetylamino sind Hydroxy, Cyano, Halogen, Sulfo, Carboxy, Sulfato, $SO_2X$ oder Alkoxy); (Substituenten für die Phenyl-, Naphthyl- oder Hetarylreste sind beispielsweise Carboxy, Sulfo, $C_1$-$C_4$-Alkyl, $C_1$-$C_4$-Alkoxy, Hydroxy, Chlor und β-Sulfatoethylsulfonyl).

W = 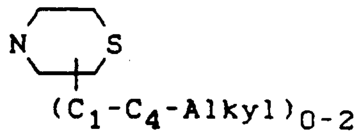 , 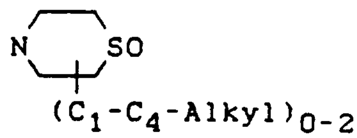 ,

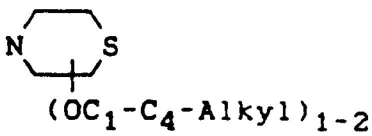 , 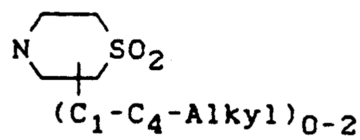 ,

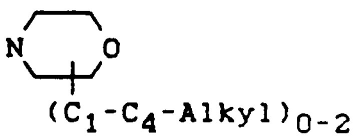 , 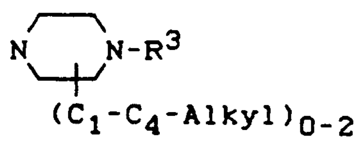 ,

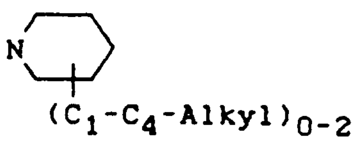 oder 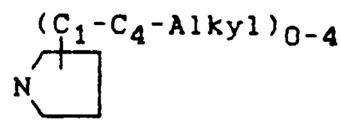

worin

$R^3$ = H oder gegebenenfalls durch wasserlöslichmachende Substituenten substituiertes $C_1$-$C_6$-Alkyl. Geeignete Substituenten für $R^3$ sind insbesondere OH, $OSO_3H$, $SO_3H$, COOH.

Bevorzugte Farbstoffe der Formel (2) sind solche der Formel

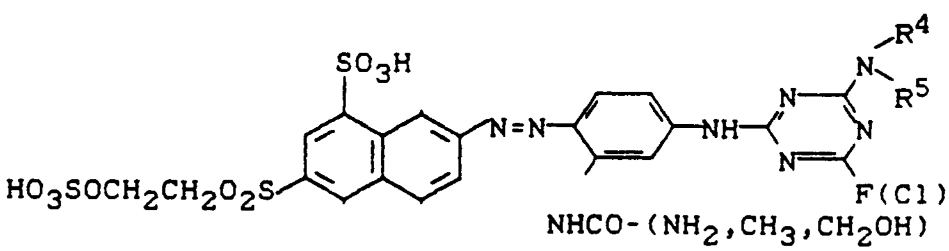

(3)

worin

$R^4$ = mit OH, $SO_3H$, $OSO_3H$, $SO_2X$ oder $CO_2H$ substituierter $C_1$-$C_6$-Alkylrest beziehungsweise mit $\beta$-Sulfatoethylsulfonyl substituierter Phenylrest,

$R^5$ = H, $C_1$-$C_4$-Alkyl sowie mit OH, $SO_3H$, $OSO_3H$, $SO_2X$ oder $CO_2H$ substituierter $C_1$-$C_6$-Alkylrest.

Die neuen Farbstoffe lassen sich nach den in der Reaktivfarbstoffchemie üblichen Herstellungsverfahren erhalten. Danach werden Farbbasen der Formel

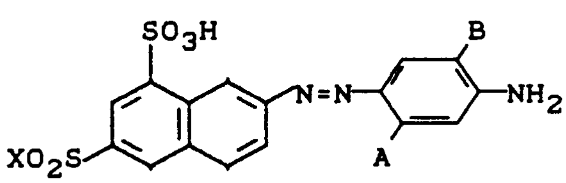

(4)

die durch Diazotierung von 2-Naphthylaminen der Formel (6) und Kupplung auf Anilinderivate (7)

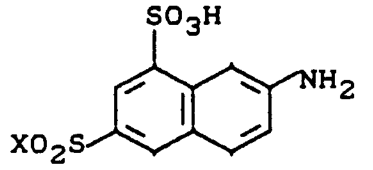

(5)

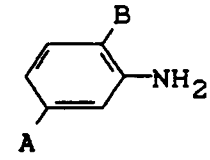

(6)

zugänglich sind, mit Reaktivkomponenten Z-Hal, worin Hal = Cl, F, Br, unter Abspaltung von H-Hal, zu bifunktionellen Reaktivfarbstoffen der Formel (1) kondensiert oder aber mit Trihalogen-s-triazin zu Farbstoffen der Formel

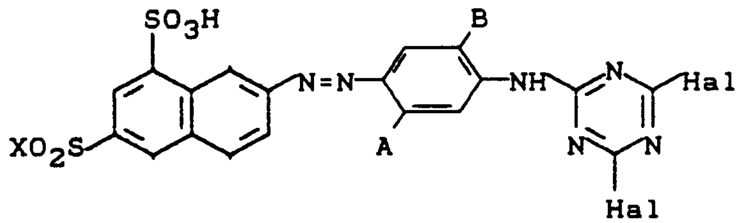

(7)

umgesetzt und diese dann unter Abspaltung von H-Hal fit Aminen, Hydroxyverbindungen oder anderen Nucleophilen zu Farbstoffen der Formel (1, Z = Triazinyl-Rest) kondensiert.

Die neuen Farbstoffe eignen sich zum Färben und Bedrucken von hydroxyl- und amidgruppenhaltigen Materialien, insbesondere Cellulosematerialien. Sie zeichnen sich durch eine hohe Reaktivität und einen hohen Fixiergrad aus. Die mit diesen Farbstoffen erhältlichen Färbungen oder Drucke auf Cellulosematerialien zeichnen sich außerdem durch eine hohe Faser-Farbstoff-Bindungsstabilität sowie durch eine hervorragende Stabilität gegenüber Oxidationsmitteln, wie peroxyd-oder chlorhaltige Waschmittel, aus. Die Auswaschbarkeit der beim Färben oder Druck nur in geringem Maße entstehenden Hydrolyseprodukte ist ausgezeichnet. Die Farbstoffe besitzen gute Naßechtheiten.

Die angegebenen Formeln sind die der freien Säuren, Bei der Herstellung werden im allgemeinen die Salze erhalten, insbesondere die Alkalisalze, wie Natrium-, Kalium- oder Lithiumsalze.

Die Farbstoffe können sowohl als Feststofformierungen wie auch als konzentrierte Lösungen eingesetzt werden,

Aus DE-A-37 32 381 sind bifunktionelle Monoazoreaktivfarbstoffe bekannt, die auf Hydroxynaphthalinsulfonsäuren als Kupplungskomponente basieren.

Aus US-A-4 377 517 sind monofunktionelle Monoazoreaktivfarbstoffe bekannt, die auf mit Phenylsulfon substituiertem Aminophenyl als Kupplungskomponente basieren.

Beispiel 1

65,1 g 6-($\beta$-Sulfatoethylsulfonyl)-8-sulfo-2-naphthylamin-mono-Kaliumsalz werden in 400 ml Wasser suspendiert, mit 200 g Eis und 60 ml einer ca. 30%igen wäßrigen Salzsäure versetzt und mit einer 5 N-Natriumnitritlösung rasch diazotiert. Nach einer Stunde Rühren bei 10 bis 15 °C wird die überschüssige salpetrige Säure mit Amidosulfonsäure entfernt. Diese cremefarbene Suspension dosiert man nun langsam zu einer neutralen Lösung der Kupplungskomponente, die aus 27,0 g N-(3-Aminophenyl)-acetamid-hydrochlorid, 100 ml Wasser, 100 g Eis und ca. 30 ml einer 10%igen wäßrigen Lithiumhydroxidlösung bereitet wurde. Dabei hält man den pH-Wert der Reaktionsmischung mit 20%iger wäßriger Kaliumhydrogencarbonatlösung konstant bei 6,0 - 6,5. Nach erfolgter Zugabe rührt man 30 Minuten nach, wobei man den pH-Wert weiterhin konstant hält.

Die rotbraune Kupplungslösung wird auf 0 °C abgekühlt und mit 13 ml (ca. 20,3 g) Trifluor-s-triazin versetzt. Durch Zugabe von Kaliumhydrogencarbonatlösung oder Sodalösung wird der pH-Wert zwischen

6,0 und 6,2 konstant gehalten. Nach ca. 5 - 10 Minuten ist die Kondensationsreaktion beendet. Man fügt eine Lösung von 29,3 g 2-Methylamino-1-ethansulfonsäure-Natriumsalz in 100 ml Wasser zu und steuert den pH-Wert mit Sodalösung zwischen 7,5 - 8,0. Man rührt 2 Stunden nach und läßt dabei die Temperatur auf 20 - 25 °C ansteigen. Es werden 4 g Aktivkohle zugefügt, und nach weiteren 15 Minuten Rühren wird die Farbstofflösung über ein Filter geklärt.

Es wird mit 130 g Kochsalz und 130 g Kaliumchlorid ausgesalzen. Die Ausfällung wird isoliert und getrocknet. Das orangerote salzhaltige Farbstoffpulver, dem die Struktur

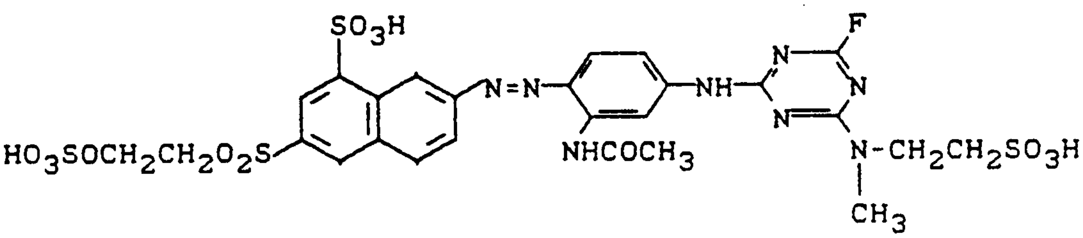

zukommt, färbt Baumwolle in brillantem goldgelben Farbton. ($\lambda_{max}$ ($H_2O$) = 404 nm).

Durch Variation der Aminkomponente sind in Analogie zu Beispiel 1 weitere wertvolle goldgelbe Reaktivfarbstoffe der Formel

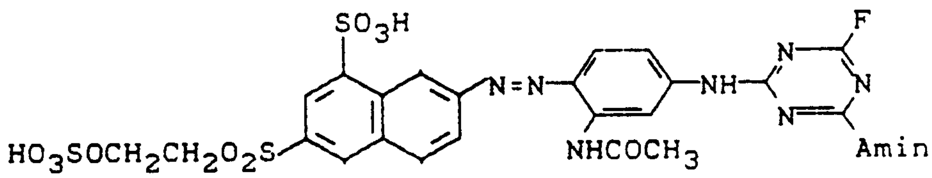

möglich.

| Beispiel | Amin | |
|---|---|---|
| 2 | $-NH-CH_2CH_2SO_3H$ | |
| 3 | 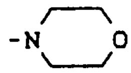 | (408 nm) |
| 4 | 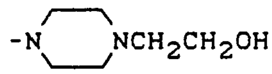 | |
| 5 | $-N(CH_2CH_2OH)_2$ | (407 nm) |
| 6 | $-NH-CH_2CH_2OH$ | (405 nm) |
| 7 | $-NH-CH_2CH_2OSO_3H$ | |
| 8 | $-NH-CH_2-CO_2H$ | (405 nm) |
| 9 | $-N(CH_3)-CH_2-CO_2H$ | |
| 10 | $-HN-CH_2CH_2O-CH_2CH_2SO_2-CH=CH_2$ | |
| 11 | 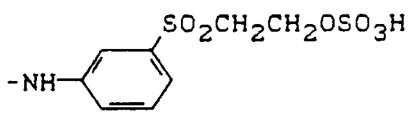 | |
| 12 | 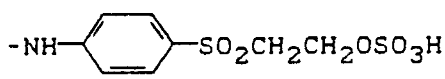 | |
| 13 | 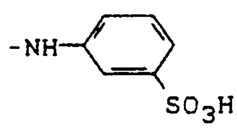 | |
| 14 | 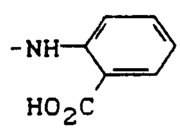 | |

| Beispiel | Amin |
|---|---|
| 15 | 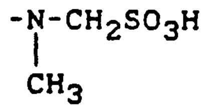 |
| 16 | $-NH-CH_2CH_2CO_2H$ |
| 17 | 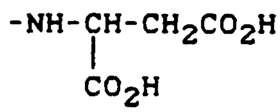 |
| 18 | 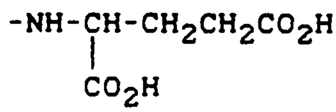 |

Entsprechende Monochlortriazinfarbstoffe erhält man, wenn man in Analogie zu den Beispielen 1 bis 18 anstelle von Trifluor-s-triazin nun Cyanurchlorid ( = Trichlor-s-triazin) einsetzt.

Verwendet man in Beispiel 1 anstelle von N-(3-Aminophenyl)acetamid als Kupplungskomponente N-(3-Aminophenyl)harnstof, 3-Methoxyanilin oder N-(3-Aminophenyl)α-hydroxyacetamid und variiert die Reaktivkomponente und das Amin, so resultieren weitere wertvolle goldgelbe Farbstoffe der Formel

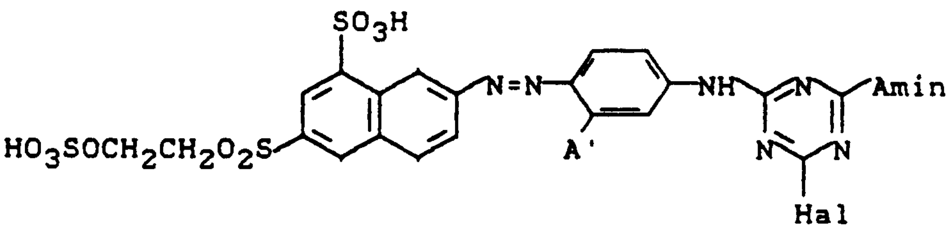

| Beispiel | A' | Hal | Amin |
|---|---|---|---|
| 19 | $NHCONH_2$ | F | $-NH-CH_2CH_2-SO_3H$ |
| 20 | $NHCONH_2$ | F | 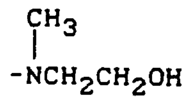 |
| 21 | $NHCONH_2$ | F | 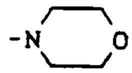 |
| 22 | $NHCONH_2$ | Cl | 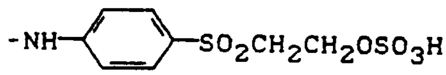 |
| 23 | $NHCONH_2$ | F | $-NHCH_2CH_2OCH_2CH_2SO_2CH_2CH_2Cl$ |
| 24 | $OCH_3$ | F | 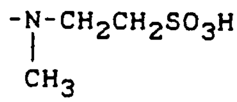 |
| 25 | $OCH_3$ | F | 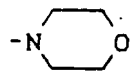 |
| 26 | $OCH_3$ | F | $-NH-CH_2-CO_2H$ |
| 27 | $OCH_3$ | Cl | 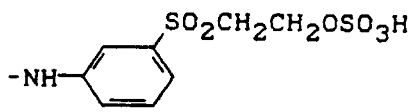 |
| 28 | $OCH_3$ | Cl | 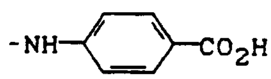 |
| 29 | $NHCOCH_2OH$ | F | 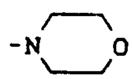 |
| 30 | $NHCOCH_2OH$ | F | 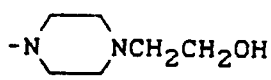 |

| Beispiel | A' | Hal | Amin |
|---|---|---|---|
| 31 | $NHCOCH_2OH$ | F | $-NH-CH_2CO_2H$ |
| 32 | $NHCOCH_2OH$ | F | $-N(CH_2CH_2OH)_2$ |
| 33 | $NHCOCH_2OH$ | Cl | 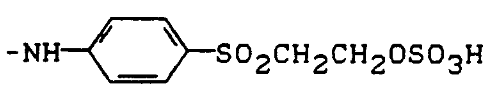 |

Beispiel 34

65,1 g 6-(β-Sulfatoethylsulfonyl)-8-sulfo-2-naphthylamin-mono-kaliumsalz werden analog Beispiel 1 diazotiert und bei pH 6,0-6,5 und 10-12 °C in Anlehnung an Beispiel 1 auf 30,1 g N-(3-Aminophenyl)-bernsteinsäuremonoamid, das aus 1,3-Diaminobenzol und Bernsteinsäureanhydrid dargestellt wurde, gekuppelt. Die Kupplungslösung wird anschließend bei 15 °C mit 26 g 5-Chlor-2,4,6-trifluorpyrimidin kondensiert. Dabei hält man durch Zugabe von Sodalösung den pH-Wert konstant bei 7,0-7,5. Die Kondensationsreaktion ist nach ca. 2 Stunden beendet. Es wird bei pH 7 auf 40-45 °C erwärmt, 5 g Aktivkohle zugesetzt und über ein Papierfilter geklärt. Die Lösung wird abgekühlt. Es werden 70 g Kochsalz zugefügt, 30 Minuten gerührt und der ausgefallene Farbstoff isoliert und getrocknet. Der Farbstoff besitzt die Struktur

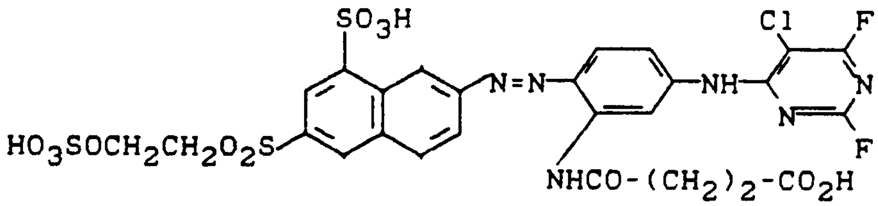

und färbt Baumwolle in brillanten goldgelben Farbtönen.

Durch Variation der Reaktivkomponente lassen sich in Analogie zu Beispiel 34 weitere wertvolle goldgelbe Reaktivfarbstoffe herstellen.

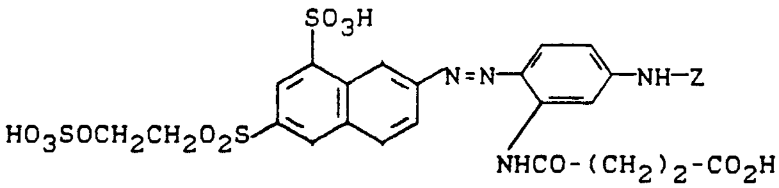

| Beispiel | Z |
|---|---|
| 35 | 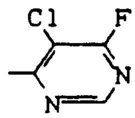 |
| 36 | 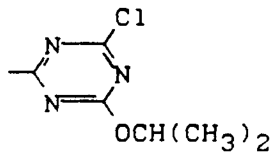 |
| 37 | 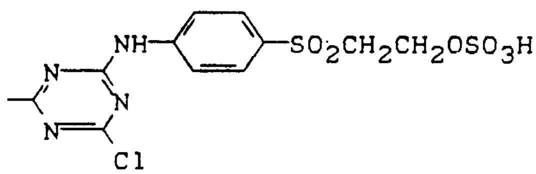 |
| 38 | 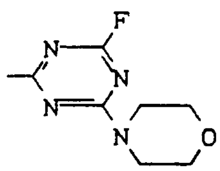 |
| 39 | 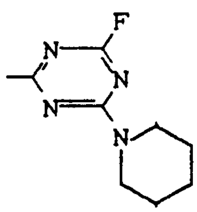 |

| Beispiel | Z |
|---|---|
| 40 | 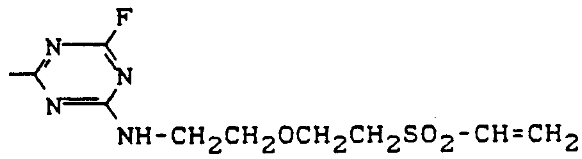 |
| 41 | 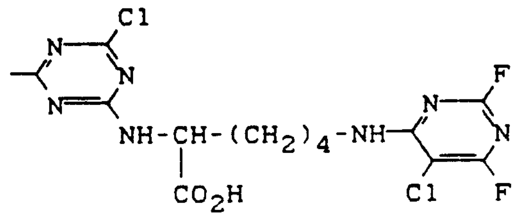 |

## Patentansprüche

**1.** Monoazoreaktivfarbstoffe der Formel

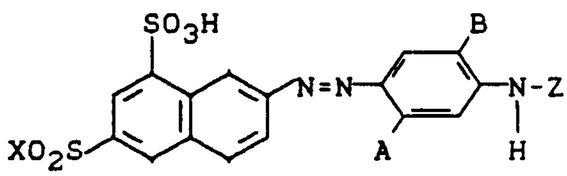

(1)

worin

A = H, Halogen, Alkyl, Alkoxy, Acylamino, Amino,

B = H, Alkyl, Alkoxy,

X = $-CH=CH_2$ oder $-CH_2CH_2-Y$ mit

Y = alkalisch eliminierbarer Rest,

Z = faserreaktiver Rest.

**2.** Farbstoffe des Anspruchs 1 der Formel

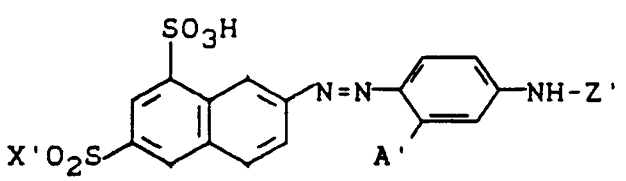

(2)

worin

X' = $CH=CH_2$ oder $CH_2CH_2OSO_3H$,

A' = $CH_3$, $OCH_3$, $NHCONH_2$, $NHCOCH_3$, $NHCOCH_2OH$, $NHCO-(CH_2)_2-COH$,

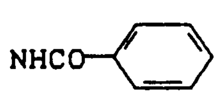

oder $NHSO_2CH_3$

und

Z' = 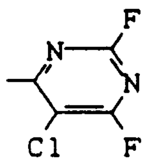 , 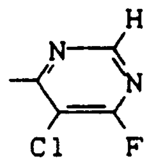 , 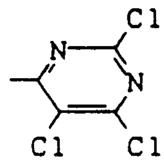 ,

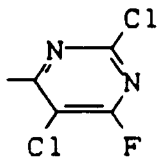 , 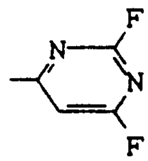 , 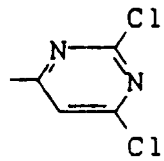 ,

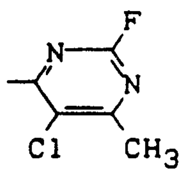 , 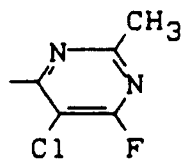 , 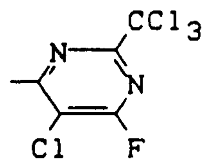 ,

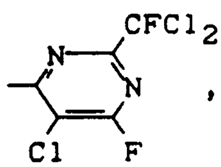 , 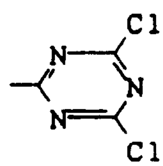 ,

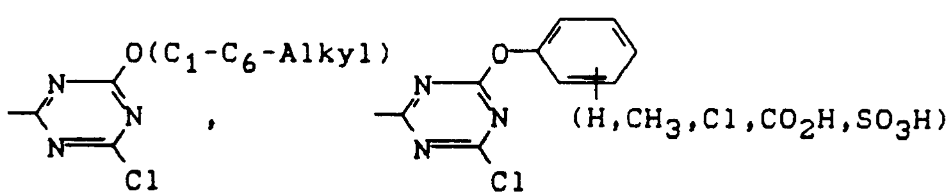

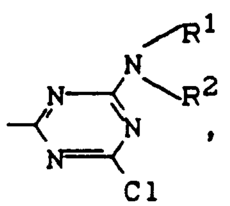 , 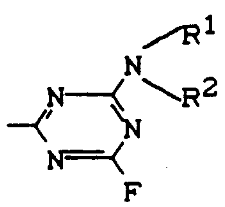 ,

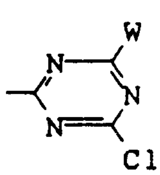 sowie 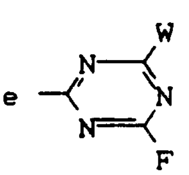 ,

mit

$R^1$ = H, gegebenenfalls substituiertes $C_1$-$C_6$-Alkyl, gegebenenfalls substituierter cycloaliphatischer Rest. (Substituenten z.B. Acylamino, Hydroxy, Halogen, Sulfo, Carboxy, Sulfato, β-

Sulfatoethylsulfonyl, $C_1$-$C_4$-Alkoxy, Phenyl, mit Sulfo, Carboxy oder $\beta$-Sulfatoethylsulfonyl substituiertes Phenyl sowie Hetaryl)

$R^2$ = H, gegebenenfalls substituiertes $C_1$-$C_6$-Alkyl, gegebenenfalls substituiertes Phenyl, Naphthyl oder Hetaryl; (Substituenten für die Alkylreste beziehungsweise Acetylamino sind Hydroxy, Cyano, Halogen, Sulfo, Carboxy, Sulfato, $SO_2X$ oder Alkoxy); (Substituenten für die Phenyl-, Naphthyl- oder Hetarylreste sind beispielsweise Carboxy, Sulfo, $C_1$-$C_4$-Alkyl, $C_1$-$C_4$-Alkoxy, Hydroxy, Chlor und $\beta$-Sulfatoethylsulfonyl).

W = 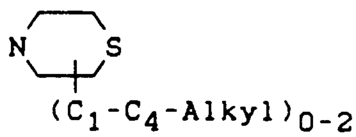 , 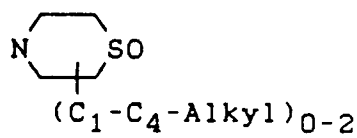 ,

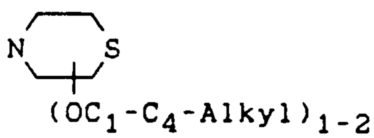 , 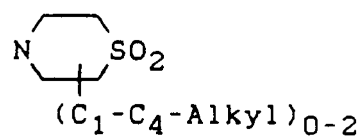 ,

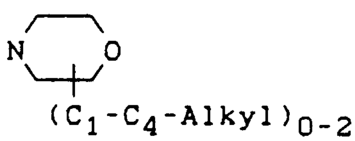 , 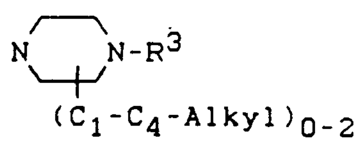 ,

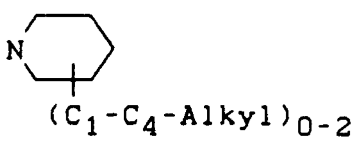 oder 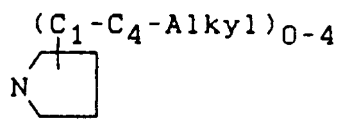

worin

$R^3$ = H oder gegebenenfalls durch wasserlöslichmachende Substituenten substituiertes $C_1$-$C_6$-Alkyl.
Geeignete Substituenten für $R^3$ sind insbesondere OH, $OSO_3H$, $SO_3H$, COOH.

**3.** Farbstoffe des Anspruchs 1 der Formel

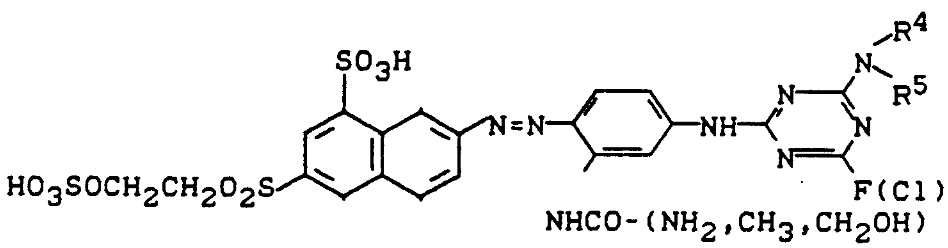

(3)

worin

$R^4$ = mit OH, $SO_3H$, $OSO_3H$, $SO_2X$ oder $CO_2H$ substituierter $C_1$-$C_6$-Alkylrest beziehungsweise mit $\beta$-Sulfatoethylsulfonyl substituierter Phenylrest,

$R^5$ = H, $C_1$-$C_4$-Alkyl sowie mit OH, $SO_3H$, $OSO_3H$, $SO_2X$ oder $CO_2H$ substituierter $C_1$-$C_6$-Alkylrest.

**Claims**

**1.** Monoazo reactive dyestuffs of the formula

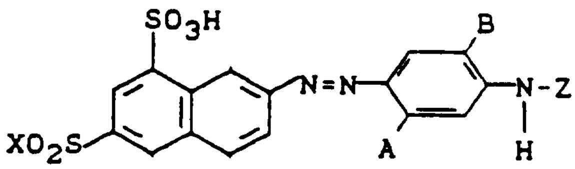

(1)

wherein

A = H, halogen, alkyl, alkoxy, acylamino or amino,
B = H, alkyl or alkoxy,
X = $-CH=CH_2$ or $-CH_2CH_2-Y$, where
Y = a radical which can be removed under alkaline conditions and
Z = a fibre-reactive radical.

**2.** Dyestuffs of Claim 1 of the formula

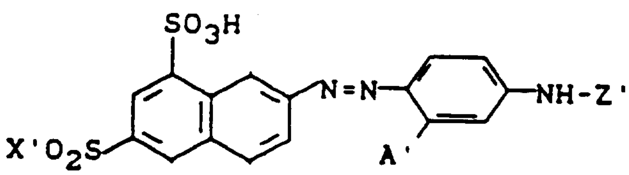

(2)

wherein

X' = $CH=CH_2$ or $CH_2CH_2OSO_3H$,
A' = $CH_3$, $OCH_3$, $NHCONH_2$, $NHCOCH_3$, $NHCOCH_2OH$, $NHCO-(CH_2)_2-CO_2H$,

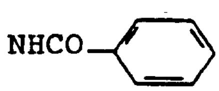

or $NHSO_2CH_3$

and

Z' = 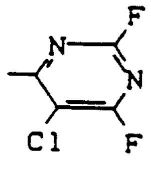 , 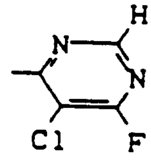 , 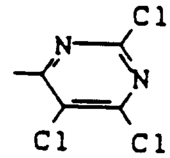 ,

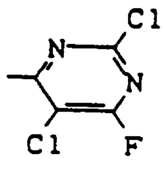 , 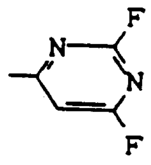 , 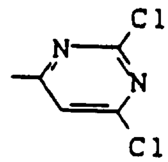 ,

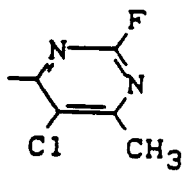 , 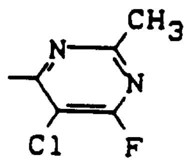 , 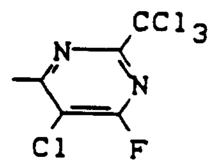 ,

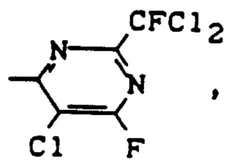 , 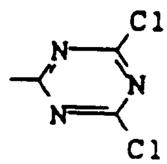 ,

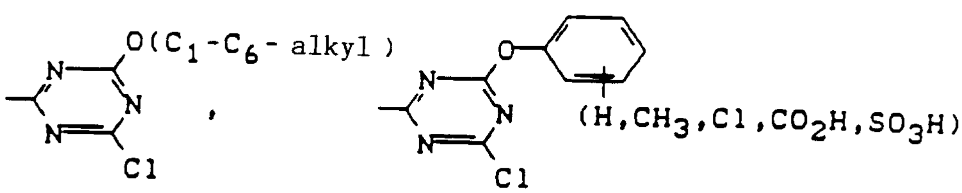

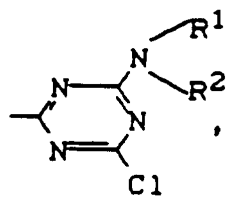 , 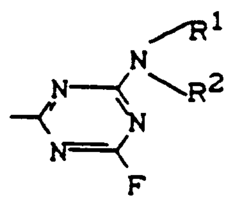 ,

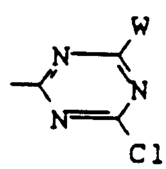 or 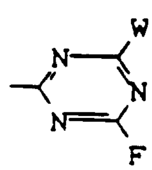 ,

where

$R^1$ = H, optionally substituted $C_1$-$C_6$-alkyl or an optionally substituted cycloaliphatic radical; (substituents, for example, acylamino, hydroxyl, halogen, sulpho, carboxyl, sulphato, $\beta$-sulphatoethylsulphonyl, $C_1$-$C_4$-alkoxy, phenyl, phenyl which is substituted by sulpho, carboxyl or $\beta$-sulphatoethylsulphonyl, and hetaryl),

$R^2$ = H, optionally substituted $C_1$-$C_6$-alkyl or optionally substituted phenyl, naphthyl or hetaryl; (substituents for the alkyl radicals or acetylamino are hydroxyl, cyano, halogen, sulpho, carboxyl, sulphato, $SO_2X$ or alkoxy); (substituents for the phenyl, naphthyl or hetaryl radicals are, for example, carboxyl, sulpho, $C_1$-$C_4$-alkyl, $C_1$-$C_4$-alkoxy, hydroxyl, chlorine

and β-sulphatoethylsulphonyl),

W = 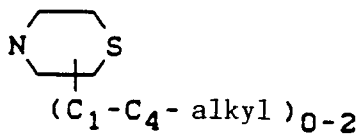 , 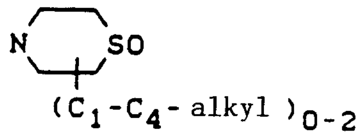 ,

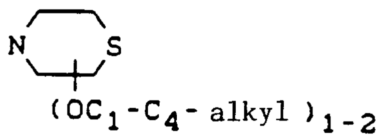 , 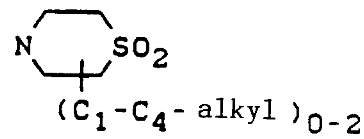 ,

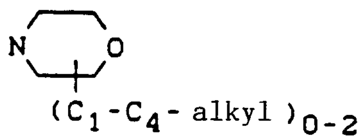 , 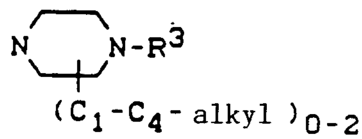 ,

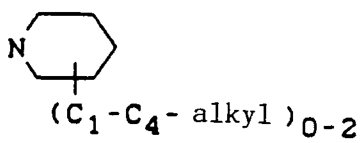 or 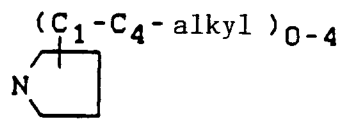

wherein

$R^3$ = H or $C_1$-$C_6$-alkyl which is optionally substituted by substituents which confer water-solubility.

Suitable substituents for $R^3$ are, in particular, OH, $OSO_3H$, $SO_3H$ and COOH.

**3.** Dyestuffs of Claim 1 of the formula

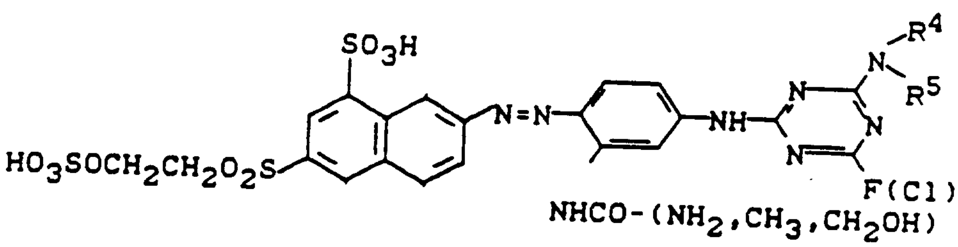 (3)

wherein

$R^4$ = a $C_1$-$C_6$-alkyl radical which is substituted by OH, $SO_3H$, $OSO_3H$, $SO_2X$ or $CO_2H$, or a phenyl radical which is substituted by β-sulphatoethylsulphonyl, and

$R^5$ = H, $C_1$-$C_4$-alkyl or a $C_1$-$C_6$-alkyl radical which is substituted by OH, $SO_3H$, $OSO_3H$, $SO_2X$ or $CO_2H$.

## Revendications

**1.** Colorants monoazoïques réactifs de formule

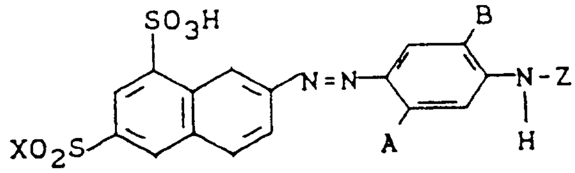

(1)

dans laquelle

A = halogène, alkyle, alcoxy, acylamino, amino,
B = H, alkyle, alcoxy,
X = $-CH=CH_2$ ou $-CH_2CH_2-Y$ où
Y = un reste éliminable par les alcalis,
Z = un reste réagissant sur la fibre.

**2.** Colorants selon la revendication 1 de formule

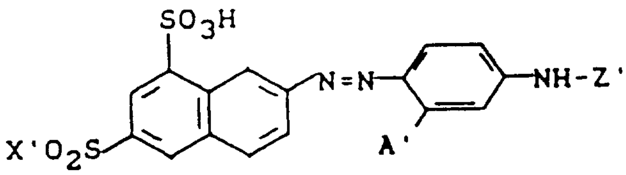

(2)

dans laquelle

X' = $CH=CH_2$ ou $CH_2CH_2OSO_3H$,
A' = $CH_3$, $OCH_3$, $NHCONH_2$, $NHCOCH_3$, $NHCOCH_2OH$, $NHCO-(CH_2)_2-CO_2H$,

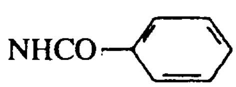

ou $NHSO_2CH_3$

et

Z' = 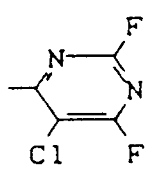 , 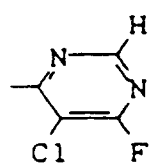 , 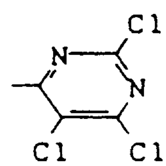 ,

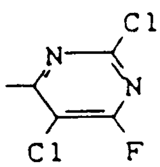 , 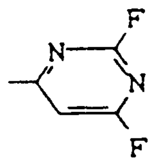 , 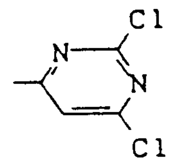 ,

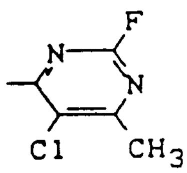 , 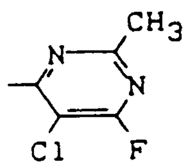 , 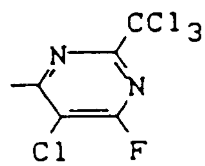 ,

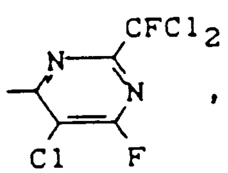 , 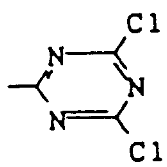 ,

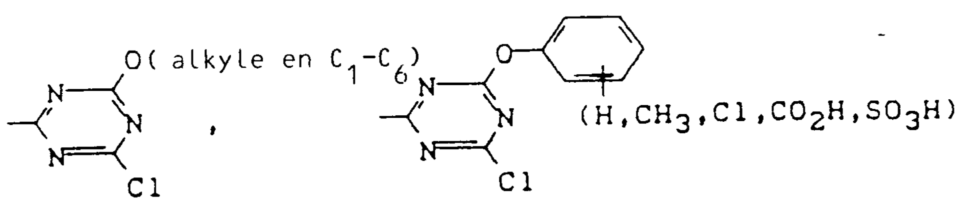

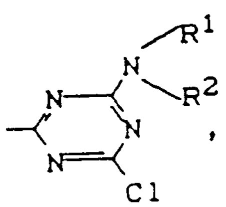 , 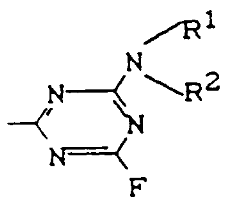 ,

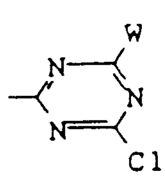 ou 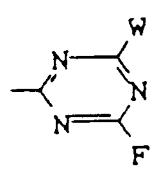 ,

où

$R^1$ = H, un reste alkyle en $C_1$-$C_6$ éventuellement substitué ou un reste cycloaliphatique éventuellement substitué (substituants, par exemple, acylamino, hydroxy, halogène, sulfo, carboxy, sulfato, $\beta$-sulfatoéthylsulfonyle, alcoxy en $C_1$-$C_4$, phényle, phényle substitué par sulfo, carboxy ou $\beta$-sulfatoéthylsulfonyle ou hétéroaryle),

$R^2$ = H, un reste alkyle en $C_1$-$C_6$ éventuellement substitué, un reste phényle, naphtyle ou hétéroaryle éventuellement substitué (les substituants pour le reste alkyle ou le reste acétylamino sont hydroxy, cyano, halogène, sulfo, carboxy, sulfato, $SO_2X$ ou alcoxy ; les substituants pour le reste phényle, naphtyle, ou hétéroaryle sont par exemple carboxy, sulfo, alkyle en $C_1$-$C_4$, alcoxy en $C_1$-$C_4$, hydroxy, chloro et $\beta$-sulfatoéthylsulfonyle),

W = 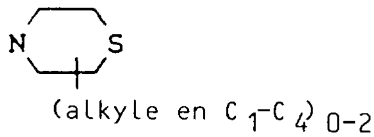 , 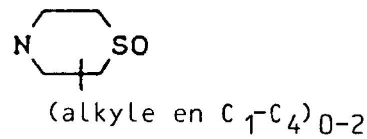 ,

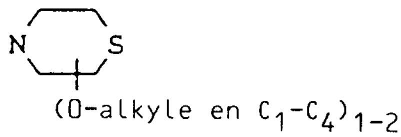 , 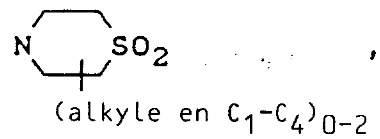 ,

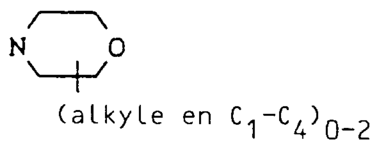 , 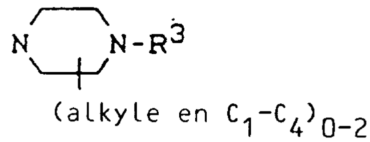 ,

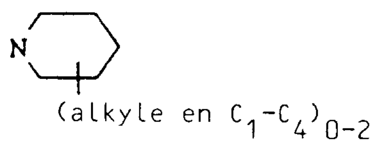 ou 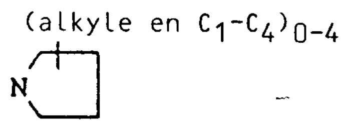

où

$R^3$ = H ou un groupe alkyle en $C_1$-$C_6$ éventuellement substitué par des substituants hydrosolubilisants.
les substituants appropriés pour $R^3$ sont en particulier OH, $OSO_3H$, $SO_3H$, COOH.

**3.** Colorants selon la revendication 1 de formule

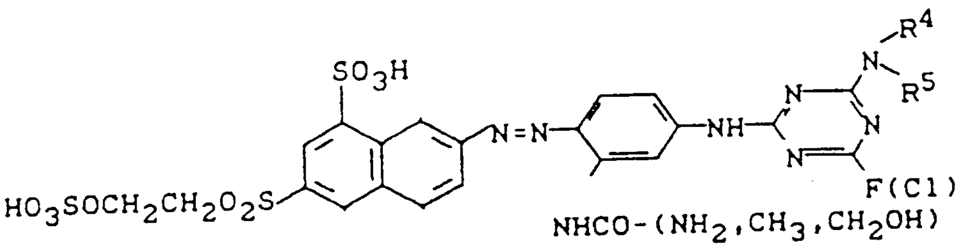 (3)

dans laquelle

$R^4$ = un reste alkyle en $C_1$-$C_6$ substitué par OH, $SO_3H$, $OSO_3H$, $SO_2X$ ou $CO_2H$ ou un reste phényle substitué par $\beta$-sulfatoéthylsulfonyle,

$R^5$ = H, un reste alkyle en $C_1$-$C_4$ ainsi qu'un reste alkyle en $C_1$-$C_6$ substitué par OH, $SO_3H$, $OSO_3H$, $SO_2X$ ou $CO_2H$.